# DEMANDE DE BREVET EUROPEEN

(11) **EP 3 919 570 A1**
(43) Date de publication de la demande: **08.12.2021**
(21) Numéro de dépôt: 21163027.2
(22) Date de dépôt: 17.03.2021
(51) Int. Cl.: C09C 1/48, C10G 1/10, B29B 17/02, C10G 1/04

(54) **PROCEDE DE CONVERSION DE PLASTIQUES USAGES EN PRESENCE D'UN SOLVANT RESULTANT DE LA CONVERSION DE PNEUS USAGES**

(30) Priorité: 26.03.2020 FR 2002955
(71) Demandeur: IFP Energies nouvelles, 92500 Rueil-Malmaison (FR)
(72) Inventeur: GAUTHIER, Thierry, 92852 RUEIL-MALMAISON CEDEX (FR); DIGNE, Romina, 92852 RUEIL-MALMAISON CEDEX (FR)
(74) Mandataire: IFP Energies nouvelles

(57) **Abrégé**

L'invention concerne un procédé de conversion d'une charge plastique et de conversion de pneus usagés pour obtenir du noir de carbone comprenant les étapes suivantes :
a) on envoie une charge solide (100) à base de pneus usagés dans une zone réactionnelle (10) en présence d'un solvant liquide (340) comprenant des composés aromatiques pour dissoudre au moins en partie ladite charge solide et décomposer thermiquement ladite charge solide dissoute afin d'obtenir du noir de carbone (160) et une première fraction liquide hydrocarbonée (120) ;
b) on envoie une charge plastique (200) à l'état fondu ensemble avec au moins une partie de la première fraction liquide hydrocarbonée (120) obtenue à l'issue de l'étape a) dans une zone de conversion (20) pour dissoudre ladite charge plastique (200) à l'état fondu et décomposer thermiquement ladite charge plastique dissoute afin d'obtenir une seconde fraction liquide hydrocarbonée (230).

## Description

### Domaine de l'invention

La présente invention concerne l'intégration d'un procédé de conversion de déchets plastiques en fractions hydrocarbonées liquides avec un procédé de conversion de pneus usagés par dégradation thermique.

### Etat de la technique

Les procédés de conversion par décomposition thermique des pneus usagés visent en général à produire des fractions gazeuses, liquides et solides. Le pneu est en général broyé initialement pour obtenir soit des broyats de pneus contenant encore une partie des fibres textiles ou fils métalliques contenus dans le pneu (typiquement des pièces de 10 cm) ou des granulats (de dimensions généralement inférieures à 5 mm) exempts de fibres textiles ou fils métalliques. Il est possible de faire réagir ces charges ainsi préparées en les exposant à la température pour décomposer le pneu usagé et récupérer une fraction gazeuse, une fraction liquide et une fraction solide. Pour arriver à décomposer le pneu, il faut en général exposer le pneu à une température assez élevée, généralement comprise entre 300 et 900°C pendant des temps de réactions allant de 30 minutes à plusieurs heures.

Il existe de nombreuses technologies de mise en œuvre de ces réactions. On peut par exemple mettre en contact les pneus avec la température dans des fours tournants (Lewandowski et al., Journal of Analytical and Applied Pyrolysis, 140, 2019, 25-53), ou dans des lits mobiles (EP2661475). Ces technologies sont robustes mais nécessitent en général de travailler à des températures assez élevées, généralement en moyenne au-delà de 500°C. Dans ces procédés, le noir de carbone, présent en général dans la charge à hauteur de 25-40% en poids et constitué à l'origine de très fines particules / agglomérats sub-micrométriques ou micrométriques, tend à s'agglomérer en présence de la gomme décomposée qui forme un coke liant ces structures à différentes échelles, le solide sortant souvent du réacteur sous la forme de blocs de plusieurs millimètres / centimètres qu'il faut alors broyer finement afin de réutiliser ce solide en tant que noir de carbone, ce qui requiert une dépense énergétique importante. Dans ces procédés, les conditions de température sont élevées et on trouve dans le réacteur essentiellement des fractions gazeuses et solides.

Les liquides produits résultent alors de la condensation des produits gazeux en aval du réacteur. Ces conditions de température élevée tendent par ailleurs à favoriser les réactions de polycondensation et de cokage pour former des structures polyaromatiques à partir de réactions de cyclisation impliquant les structures aromatiques et oléfiniques présentes (M.F. Laresgoiti, B.M. Caballero, I. de Marco, A. Torres, M.A. Cabrero, M.J. Chomón. J. Anal. Appl. Pyrolysis 71 (2004) 917-934) ou du coke. Plus la température est élevée, et plus les teneurs en structures polyaromatiques formées et en coke formé augmentent. Or, si les molécules aromatiques sont d'une part de bons solvants et trouvent d'autre part de nombreuses applications, notamment comme bases pétrochimiques, les structures polyaromatiques par contre sont préjudiciables à la qualité du liquide formé et très difficiles à raffiner ou à convertir. Elles sont de plus des précurseurs de coke idéal. Il y a donc intérêt à essayer de limiter au maximum les réactions de polycondensation pour produire un minimum de structures polyaromatiques en préservant les structures mono-aromatiques présentes.

Pour améliorer la qualité de la phase solide et limiter la formation de coke sur le noir de carbone, il est possible de baisser la pression partielle d'hydrocarbure en injectant de la vapeur pendant les réactions de craquage qui nécessitent néanmoins une température élevée au-delà de 500°C pour réaliser le craquage dans des conditions essentiellement gaz-solide (US2016/0083657). Ces procédés gaz-solide induisent en général des productions de gaz incondensables dans les conditions atmosphériques qui sont très élevées et comprises entre 10 et 25% poids par rapport à la charge de pneu entrant dans le réacteur. Or la valorisation des gaz de réaction est localement complexe. Ces gaz sont donc en général utilisés pour produire la chaleur requise pour faire les réactions mais cela se fait au détriment de la quantité de produits liquides facilement valorisables qui est donc alors limitée. Ces fractions liquides sont en effet ensuite éventuellement valorisées pour produire de nouvelles coupes hydrocarbonées (naphta, essence, kérosène, gazole, distillat sous vide, résidus) utilisées en raffinerie pour produire des carburants ou en pétrochimie pour produire des bases servant ensuite à élaborer des matières plastiques. Il faut néanmoins raffiner ces coupes afin de les mettre aux spécifications désirées. Plus les structures polyaromatiques sont nombreuses, et plus le raffinage est complexe.

Une voie alternative consiste à mettre en contact les charges de pneus en contact avec un liquide, à monter ce liquide en température et à dissoudre et convertir les pneus dans une phase liquide homogène dans laquelle la charge de pneu est agitée et disparait progressivement. Un exemple de cette mise en œuvre est donné dans US 3,978,199 et US 3,704,108. Ce type de procédé permet de récupérer le noir de carbone en phase liquide après filtration sans qu'il y ait eu agglomération de ces particules ou dépôt de coke à leur surface comme c'est le cas dans les réactions opérant en phase gaz-solide. La mise en œuvre dans des conditions de température limitée inférieures à 450°C limite par ailleurs les réactions de polycondensation des aromatiques, la formation de coke à la surface des particules de noir de carbone et la formation de gaz qui est en général comprise entre 1 et 7% poids de la charge rentrante. La mise en œuvre d'un solvant contenant des fractions aromatiques, préférentiellement mono-aromatiques, est favorable et permet de mieux dissoudre la charge dans le réacteur. Comme naturellement les pneus sont composés de différentes gommes dont des quantités importantes de caoutchouc synthétique composé de gommes styrène-butadiène (SBR ou « *Styrene Butadiene Rubber* » selon la terminologie anglo-saxonne), les fractions liquides produites contiennent des fractions importantes d'aromatiques et il peut être avantageux de séparer et de recycler une partie du liquide formé pendant la réaction pour l'utiliser comme solvant, alors que la fraction liquide non recyclée peut être envoyée en raffinerie pour être raffinée puis valorisée comme coupe hydrocarbure pour alimenter les pools produits ou la pétrochimie.
Il faut souligner que ces procédés de traitement de pneus usagés sont en général dispersés sur le territoire et consistent en des installations de capacités limitées, typiquement entre 5 et 50 kilotonnes/an de pneus entrants.

Les plastiques usagés sont présents en grande quantité dans les filières post consommation. Il existe de nombreuses filières (emballage, déchets d'équipements électriques et électroniques, agriculture, automobile, bâtiment, jouet) caractérisées par des organisations et modes de collectes spécifiques. En fonction des usages on retrouve dans les filières les grandes résines plastiques utilisées, à savoir les polyoléfines (polyéthylène et polypropylène), le polychlorure de vinyle (PVC), le polytéréphtalate d'éthylène (PET), les polyuréthanes, le polystyrène ainsi que de nombreuses autres matières plastiques en plus petites quantités. Les plastiques usagés qui sont collectés dans ces filières sont en général triés et il en résulte des flux de matières contenant essentiellement une résine, par exemple le PET ou le PVC ou le Polyéthylène, dont le recyclage peut être envisagé soit mécaniquement, soit chimiquement pour refaire des résines plastiques réutilisables. A l'issue de la collecte et du tri, il existe également des flux de plastiques mélangés, dont le recyclage pour refaire des résines plastiques n'est pas envisageable car trop complexe et donc trop cher. Dans ce cas, d'autres voies de valorisation peuvent être plus pertinentes comme la décomposition thermique, appelée également craquage, ou pyrolyse, qui peut être mise en œuvre en présence ou non d'un catalyseur (Chika Muhammad, Jude A. Onwudili, and Paul T. Williams, Energy Fuels 2015, 29, 2601-2609), ces voies étant généralement conduites en absence d'un solvant liquide dans les conditions de réactions. Dans le brevet US9,920,255 cependant, un procédé utilisant un solvant liquide est utilisé pour faciliter la mise en œuvre réactionnelle, et il est bien spécifié que ce solvant liquide est importé et est issu de pétrole, sa teneur en aromatique devant être supérieure à 25%. L'utilisation de coupes aromatiques telles que les coupes de distillat moyen ou les coupes de distillat lourd qui sont produites en raffinerie est en effet possible. Cependant l'utilisation de ces solvants pose plusieurs problèmes, en particulier lorsque le site de traitement est un site de capacité limitée (comprise par exemple entre 5 et 50 kilotonnes/an [kt/a]) et délocalisé loin d'une raffinerie. Ces solvants ne sont alors pas disponibles sur le site et leur acheminement est couteux. De plus l'usage de solvants issus directement du raffinage de pétrole contribuerait à diluer des produits issus du recyclage avec des produits fossiles vierges.

La décomposition thermique des plastiques permet de produire des fractions liquides qui sont ensuite éventuellement valorisées pour produire de nouvelles coupes hydrocarbonées (naphta, essence, kérosène, gazole, distillat sous vide, résidus) utilisables en raffinerie pour produire des carburants ou en pétrochimie pour produire des bases servant ensuite à élaborer des matières plastiques. Valoriser ces coupes produites nécessite néanmoins de raffiner en aval ces coupes afin de les mettre aux spécifications désirées. Dans cette optique, il est souhaitable d'éviter de traiter des plastiques contenant des hétéro-éléments, comme le PVC qui contient des halogénés, ou des plastiques comme le PET et les polyuréthanes qui contiennent beaucoup d'oxygénés et dont la structure chimique favorise la production de coke. Il est donc bien connu que pour produire des fractions liquides par décomposition thermique ou catalytique, les plastiques les plus intéressants sont les polyoléfines et le polystyrène. Il existe de nombreux flux contenant en majorité des polyoléfines qui sont difficiles à recycler mécaniquement et qui peuvent donc être convertis par décomposition thermique ou catalytique. On citera par exemple les flux de films plastiques agricoles ou les films plastiques mélangés collectés dans les ordures ménagères.

Les procédés de décomposition thermique des plastiques sont bien connus depuis de nombreuses années. La mise en œuvre peut être réalisée de multiples façons, par exemple dans des réacteurs parfaitement agités (DE19702539, WO2011/077479), dans des fours tournants, dans des filières animées par des vis sans fin ou dans des lits fluidisés. La mise en œuvre de la décomposition thermique des polyoléfines en réacteur parfaitement agité en phase liquide est assez complexe en l'absence d'un solvant ajouté liquide dans les conditions de réaction ; en effet, il faut d'abord fondre le plastique (par exemple dans une extrudeuse), puis mélanger le plastique fondu avec les produits ayant réagi, ce qui est complexe car la décomposition des polyoléfines conduit à former essentiellement des chaines hydrocarbonées longues de paraffines et d'oléfines, qui conduisent à des liquides de viscosité élevée et qui figent facilement dans des zones de faible température. Ces molécules ont par ailleurs un pouvoir de dissolution des polyoléfines beaucoup plus limité que les molécules aromatiques. Le contrôle des transferts (chaleur, matière), de la température et de l'agitation dans le milieu réactionnel est donc complexe. Pour remédier à tout cela, il est d'usage de conduire les réactions à des températures suffisamment élevées, au-delà de 450°C pour limiter les problèmes de transfert de chaleur et les problèmes d'agitation. Dans ces conditions cependant, les réactions de polycondensation, de cokage et la production de gaz deviennent de plus en plus conséquentes lorsque la température de réaction augmente.

Comme pour les pneus usagés, il faut souligner que ces procédés de traitement de plastiques usagés concernent en général des petites capacités généralement inférieures à 50 kilotonnes/an, car les plastiques usagés sont en général dispersés sur le territoire en fonction de la consommation et le transport des déchets est couteux car la masse volumique des déchets solides même compactés reste faible. Il est donc avantageux de traiter les déchets à proximité des centres de tri pour minimiser le transport. La conversion des pneus usagés ou des plastiques usagés en fractions liquides par décomposition thermique permet de densifier la matière et rend le transport de la fraction liquide pour le valoriser plus économique.

Il faut cependant souligner qu'à l'issue de la conversion des plastiques usagés, la qualité du liquide résultant de la conversion est insuffisante pour que le liquide soit directement valorisable en carburant, en base pétrochimique ou en produit. Des étapes ultérieures de raffinage combinant souvent distillation, conversion catalytique, hydrogénation ou hydrotraitement sont requises pour ajuster les points de coupe, la teneur en hétéro-éléments ou la structure chimique. Pour être économiquement intéressantes, ces étapes ne peuvent être envisagées que dans des raffineries ou plateformes pétrochimiques dans lesquelles les procédés existent et disposent de très grosses capacités, souvent de l'ordre du million de tonnes par an.

Pour pallier à tous ces inconvénients, la Demanderesse a mis au point un nouveau procédé combinant la valorisation des pneus usagés avec la valorisation des plastiques usagés par décomposition thermique, ce procédé étant caractérisé par le fait que les produits liquides de la décomposition des pneus, qui contiennent des composés aromatiques, et plus particulièrement des composés mono-aromatiques, sont utilisés pour servir de solvant lors de l'étape de décomposition thermique des plastiques usagés. L'utilisation de ce solvant, maintenu essentiellement liquide dans les conditions de réaction de décomposition thermique, permet de limiter la température à laquelle la décomposition thermique est conduite, typiquement à une température inférieure ou égale à 425°C dans la zone de décomposition thermique des pneus usagés et à une température inférieure ou égale à 450°C dans la zone de décomposition thermique des plastiques usagés. Cela permet alors de limiter la production de gaz incondensables contenant de 1 à 4 atomes de carbone à un niveau inférieur à 5% en poids par rapport au poids total de la charge solide. Le procédé selon l'invention permet également de maximiser la production de noir de carbone résultant de la décomposition thermique des pneus usagés qui est séparé du liquide avant mise en contact avec le plastique usagé.

### Objets de l'invention

La présente invention concerne un procédé de conversion d'une charge plastique et de conversion de pneus usagés pour obtenir du noir de carbone comprenant au moins les étapes suivantes :
a) on envoie une charge solide à base de pneus usagés dans une zone réactionnelle en présence d'un solvant liquide comprenant des composés aromatiques pour dissoudre au moins en partie ladite charge solide et décomposer thermiquement à une température inférieure ou égale à 425°C ladite charge solide au moins partiellement dissoute afin d'obtenir au moins du noir de carbone et une première fraction liquide hydrocarbonée ;
b) on envoie une charge plastique à l'état fondu ensemble avec au moins une partie de la première fraction liquide hydrocarbonée obtenue à l'issue de l'étape a) dans une zone de conversion pour dissoudre au moins en partie ladite charge plastique à l'état fondu et décomposer thermiquement à une température inférieure ou égale à 450°C ladite charge plastique partiellement dissoute afin d'obtenir au moins en partie une seconde fraction liquide hydrocarbonée.

Avantageusement, ledit procédé comprend en outre les étapes suivantes :
c) on envoie au moins en partie la fraction liquide hydrocarbonée issue de l'étape a) vers une zone de fractionnement pour obtenir au moins une coupe hydrocarbonée intermédiaire dont la température d'ébullition initiale est comprise entre 250 et 325°C et la température d'ébullition finale est comprise entre 350 et 450°C, une coupe légère et une coupe lourde ;
d) on envoie au moins en partie une fraction de la coupe hydrocarbonée intermédiaire vers la zone de réaction de l'étape a) en tant que solvant liquide.

Avantageusement, ladite première fraction liquide hydrocarbonée a une teneur en composés aromatiques comprise entre 30 et 70% en poids par rapport au poids total de ladite première fraction liquide.

Avantageusement, ladite coupe hydrocarbonée intermédiaire a une teneur en composés aromatiques comprise entre 30 et 70% poids par rapport au poids total de ladite coupe hydrocarbonée.

Avantageusement, on envoie une partie de la seconde fraction liquide hydrocarbonée vers la zone de fractionnement.

Avantageusement, on envoie au moins en partie une fraction de la coupe hydrocarbonée intermédiaire vers la zone de conversion en tant que solvant liquide complémentaire.

Avantageusement, on envoie au moins en partie la coupe hydrocarbonée intermédiaire vers une unité d'enrichissement en composés aromatiques pour obtenir un flux riche en composés aromatiques et un flux pauvre en composés aromatiques, ledit flux riche en composés aromatiques étant envoyé dans la zone réactionnelle en tant que solvant liquide.

Avantageusement, on envoie au moins en partie ledit flux riche en composés aromatiques vers la zone de conversion en tant que solvant liquide complémentaire.

Avantageusement, ladite unité d'enrichissement en composés aromatiques est choisie parmi les unités d'extraction au solvant furfural, phénol ou N-méthyl-2-pyrrolidone.

Avantageusement, ladite charge plastique est un mélange de plastiques contenant au moins 90% en poids de polyoléfines et de polystyrène par rapport au poids total de ladite charge.

Avantageusement, la première fraction liquide hydrocarbonée et/ou la seconde fraction liquide hydrocarbonée comprend au moins 40% en poids de composés dont la température d'ébullition initiale est supérieure à 300°C.

Avantageusement, le ratio entre le débit du solvant liquide et le débit de ladite charge solide injectés dans la zone réactionnelle est compris entre 1 et 10 poids/poids.

Avantageusement, le ratio entre la somme des débits de la fraction liquide hydrocarbonée et le solvant liquide complémentaire divisée par le débit de la charge plastique à l'état fondu est compris entre 1 et 10 poids/poids.

Dans un mode de réalisation selon l'invention, l'étape a) comprend les sous-étapes suivantes :
a1) on envoie ladite charge solide et ledit solvant liquide dans un premier réacteur agité pour dissoudre au moins en partie ladite charge solide ;
a2) on envoie ladite charge solide au moins en partie dissoute obtenu à l'issue de l'étape a1) dans un second réacteur agité pour décomposer thermiquement à une température inférieure ou égale à 425°C ladite charge solide et obtenir un effluent liquide contenant des particules de noir de carbone en suspension ;
a3) on refroidit ledit effluent liquide obtenu à l'issue de l'étape a2) à une température inférieure à 150°C ;
a4) on filtre, on lave et on sépare les particules de noir de carbone de l'effluent liquide refroidi obtenu à l'issue de l'étape a3) pour obtenir du noir de carbone et une première fraction liquide hydrocarbonée.

Avantageusement, l'étape b) comprend les sous-étapes suivantes :
b1) on envoie ladite charge plastique à l'état fondu et au moins une partie de la première fraction liquide hydrocarbonée dans un premier réacteur agité pour dissoudre au moins en partie ladite charge plastique à l'état fondu ;
b2) on envoie ladite charge plastique au moins en partie dissoute obtenue à l'issue de l'étape b1) dans un second réacteur agité pour décomposer thermiquement à une température inférieure ou égale à 450°C ladite charge plastique et obtenir au moins en partie une seconde fraction liquide hydrocarbonée.

### Description des figures

La figure 1 est une représentation schématique du procédé selon l'invention selon un mode de réalisation.
La figure 2 est une représentation schématique du procédé selon l'invention selon un autre mode de réalisation.
La figure 3 est une représentation schématique détaillée du procédé selon l'invention tel qu'illustré en figure 1.

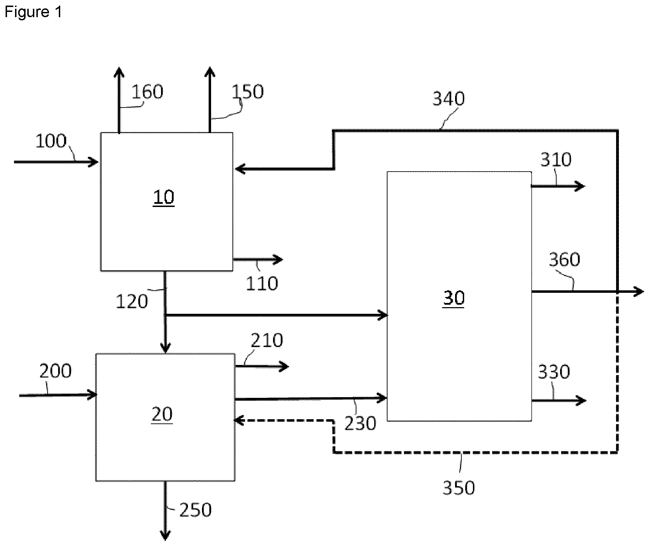

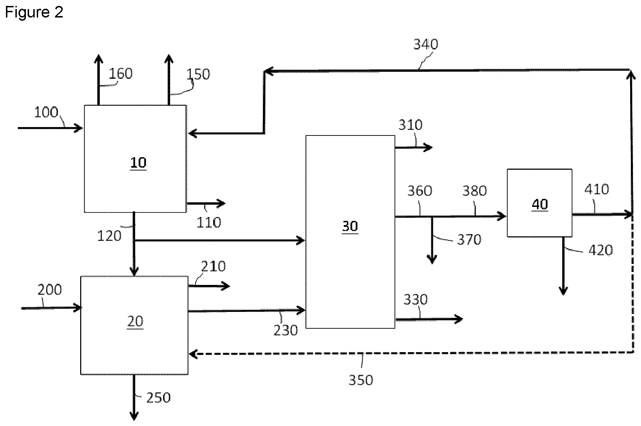

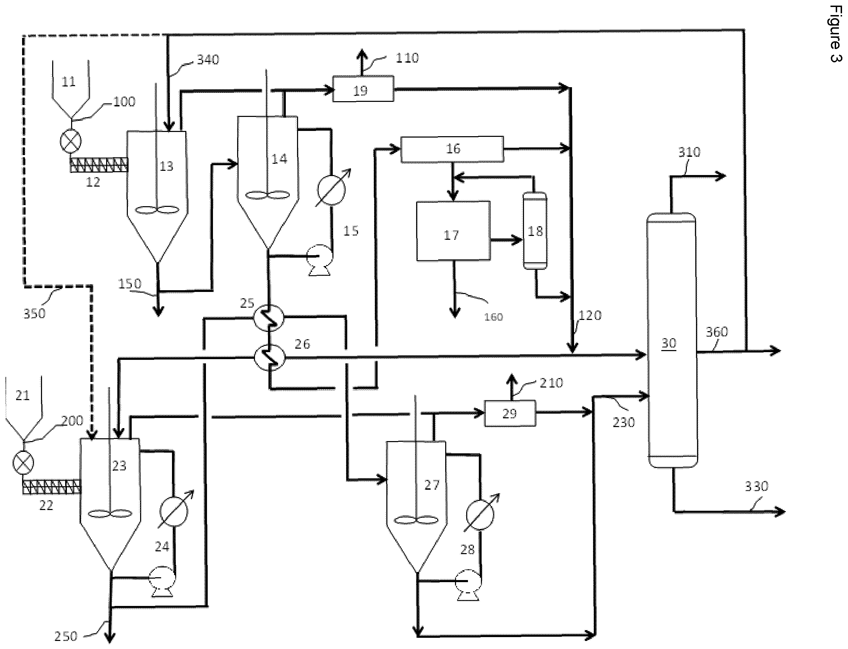

Les références des figures 2 et 3 identiques à celles de la figure 1 désignent les mêmes éléments.

### Description détaillée de l'invention

Selon l'invention, le procédé de conversion d'une charge plastique et de conversion de pneus usagés pour obtenir du noir de carbone comprend au moins les étapes suivantes (figure 1):
a) on envoie une charge solide **100** à base de pneus usagés dans une zone réactionnelle **10** en présence d'un solvant liquide **340** comprenant des composés aromatiques pour dissoudre au moins en partie ladite charge solide et décomposer thermiquement à une température inférieure ou égale à 425°C, de préférence comprise entre 375 et 425°C, ladite charge solide au moins partiellement dissoute afin d'obtenir au moins du noir de carbone **160** et une première fraction liquide hydrocarbonée **120** ;
b) on envoie une charge plastique **200** à l'état fondu ensemble avec au moins une partie de la première fraction liquide hydrocarbonée **120** obtenue à l'issue de l'étape a) dans une zone de conversion **20** pour dissoudre au moins en partie ladite charge plastique à l'état fondu **200** et décomposer thermiquement à une température inférieure ou égale à 450°C, de préférence comprise entre 375 et 425°C, ladite charge plastique partiellement dissoute afin d'obtenir au moins en partie une seconde fraction liquide hydrocarbonée **230** ;
c) optionnellement, on envoie au moins en partie la première fraction liquide hydrocarbonée **120** issue de l'étape a) vers une zone de fractionnement **30** pour obtenir au moins une coupe hydrocarbonée intermédiaire **360** (appelée aussi ici fraction intermédiaire ou coupe intermédiaire) dont la température d'ébullition initiale est comprise entre 250 et 325°C et la température d'ébullition finale est comprise entre 350 et 450°C, une coupe légère et une coupe lourde ;
d) optionnellement, on envoie au moins en partie une fraction de la coupe hydrocarbonée intermédiaire **360** vers la zone réactionnelle **10** de l'étape a) en tant que solvant liquide **340** ;
e) optionnellement, on envoie au moins en partie une fraction de la coupe hydrocarbonée intermédiaire **360** vers la zone réactionnelle **20** de l'étape b) en tant que solvant liquide complémentaire **350** ;
f) optionnellement, on envoie au moins en partie la seconde fraction liquide hydrocarbonée **230** issue de l'étape b) vers la zone de fractionnement **30.**

La charge solide **100** utilisée dans le cadre de la présente invention est avantageusement à base de pneus résultant du traitement de pneus usagés pouvant provenir de toute origine, telle que les véhicules légers (VL) ou les poids lourds (PL) par exemple. Ladite charge solide peut se présenter avantageusement sous la forme de granulats de pneus, i.e. sous la forme de particules de tailles inférieures à 5 mm et sensiblement exemptes de fibres textiles et fils métalliques, et/ou de broyats de pneus, i.e. des morceaux de pneus broyés, de taille caractéristique généralement inférieure à 20 cm et non exemptes de fibres textiles et fils métalliques.

Lors de l'étape a) du procédé, la gomme contenue dans la charge solide à base de pneus usagés est dissoute au contact d'un solvant liquide **340** puis est décomposée thermiquement. Au cours de la dissolution et de la décomposition thermique, l'étape a) est de préférence réalisée à une température inférieure ou égale à 425°C, de préférence à une température comprise entre 375 et 425°C. A l'issue de l'étape a), les matières solides contenues dans les déchets de pneus sont libérées et séparées de la fraction liquide hydrocarbonée **120** obtenue à l'issue de cette étape. On récupère ainsi à l'issue de l'étape a) le noir de carbone **160** et éventuellement d'autres matériaux solides présents non dissous, tels que les fils métalliques **150.** Avantageusement, les fractions gazeuses **110** sont évacuées de la zone réactionnelle **10** et peuvent éventuellement être utilisées pour produire une partie de l'énergie nécessaire au procédé.

Lors de l'étape b) du procédé selon l'invention, on envoie une charge plastique **200** à l'état fondu ensemble avec au moins une partie de la première fraction liquide hydrocarbonée **120** obtenue à l'issue de l'étape a) dans une zone de conversion **20** pour dissoudre au moins en partie ladite charge plastique à l'état fondu **200** et décomposer thermiquement à une température inférieure ou égale à 450°C, de préférence comprise entre 375 et 425°C, ladite charge plastique partiellement dissoute afin d'obtenir au moins en partie une seconde fraction liquide hydrocarbonée **230.**

La charge plastique **200** comprend, de préférence est constituée de, un mélange de plastiques contenant au moins 90% en poids de polyoléfines (par exemple le polyéthylène, le polypropylène) et de polystyrène par rapport au poids total de ladite charge, les 10% en poids restants pouvant contenir au moins 80% d'autres plastiques et des impuretés éventuellement présentes comme du papier, du carton, des fibres textiles, des métaux, ou toute autre charge solide pouvant être présente dans les déchets.
Préférentiellement, la charge plastique **200** a été déchiquetée au préalable en fraction dont la taille caractéristique (dimension la plus grande) est inférieure à 10 cm, préférentiellement inférieure à 2 cm, et encore plus préférentiellement inférieure à 1 cm.

Avant son introduction dans la zone de conversion **20,** la charge plastique **200** est tout d'abord fondue à une température généralement comprise entre 100 et 250°C, préférentiellement entre 100 et 180°C, en fonction de la nature et de la composition de la charge plastique. La charge plastique **200** à l'état fondu est ensuite mise en contact avec au moins une partie de la fraction liquide hydrocarbonée **120** résultant de la conversion des pneus usagés, et éventuellement avec un solvant liquide complémentaire **350** pour réaliser la décomposition thermique de la charge plastique à une température inférieure à 450°C, de préférence comprise entre 350 et 425°C. Avantageusement, les fractions de la charge plastique non fondues et les résidus solides éventuels de réaction sont récupérés via la ligne **250.** Avantageusement, les fractions gazeuses **210** résultant de la décomposition thermique sont évacuées de la zone réaction de conversion **20** et peuvent éventuellement être utilisées pour produire une partie de l'énergie nécessaire au procédé.

Dans un mode de réalisation selon l'invention, on envoie au moins en partie la fraction liquide hydrocarbonée **120** issue de l'étape a) vers une zone de fractionnement **30** pour obtenir au moins une coupe hydrocarbonée intermédiaire **360** dont la température d'ébullition initiale est comprise entre 250°C et 325°C et la température d'ébullition finale est comprise entre 350°C et 450°C. De manière préférentielle, la zone de fractionnement **30** permet de produire au moins une fraction légère **310** dont la température d'ébullition finale sera préférentiellement comprise entre 250°C et 325°C, une fraction intermédiaire **360,** dont la température d'ébullition initiale sera préférentiellement comprise entre 250°C et 325°C, et la température d'ébullition finale sera préférentiellement comprise entre 350°C et 450°C, et au moins une fraction lourde **330,** dont la température d'ébullition initiale sera préférentiellement comprise entre 350°C et 450°C.

Dans un mode de réalisation préféré selon l'invention, on envoie au moins en partie une fraction de la coupe hydrocarbonée intermédiaire **360** vers la zone de réaction **10** de l'étape a) en tant que solvant liquide **340.** De préférence, le ratio entre le débit du solvant liquide **340** et le débit de la charge solide **100** injectés dans la zone réactionnelle **10** est compris entre 1 et 10 poids/poids (pds/pds), préférentiellement compris entre 3 et 5 pds/pds. En effet, une des caractéristiques de la coupe intermédiaire **360** et de la fraction liquide hydrocarbonée **120** issu de la zone réactionnelle **10** est qu'elles contiennent respectivement une teneur en aromatiques comprise entre 30 et 70% poids par rapport au poids total de la coupe intermédiaire ou de la fraction liquide hydrocarbonée, préférentiellement entre 40 et 60% en poids, lesdites fractions comprenant une teneur d'au moins 70% en poids, préférentiellement d'au moins 80% en poids de composés mono-aromatiques par rapport au poids total de composés aromatiques, permettant de dissoudre efficacement la charge solide **100** et de réduire efficacement la viscosité du milieu réactionnel dans la zone de conversion **20.** Un autre avantage du procédé selon l'invention est que l'utilisation de la coupe intermédiaire **360** dont la température d'ébullition est assez élevée (au-delà de 250°C) en tant que solvant liquide **340** ou **350** permet de limiter la pression dans les réacteurs à un niveau inférieur à 1,5 MPa compte tenu de la production limitée de gaz et d'hydrocarbures légers dans la zone réactionnelle **10** et la zone de conversion **20.**

Avantageusement, on envoie également au moins en partie la fraction intermédiaire **360** vers la zone de conversion **20** de l'étape b) en tant que solvant liquide complémentaire **350** pour être mélangée avec la charge plastique à l'état fondu et ainsi fluxer le milieu réactionnel dans la zone de conversion **20.** De préférence, la somme des débits de fraction liquide hydrocarbonée **120** et de solvant liquide complémentaire **350** divisée par le débit de la charge plastique **200** à l'état fondu est compris entre 1 et 10 pds/pds, préférentiellement compris entre 1,5 et 3 pds/pds. En fonction du rapport entre la charge solide **100** et de la charge plastique **200,** le liquide fluxant la zone de conversion **20** sera préférentiellement la fraction liquide hydrocarbonée **120** provenant de la zone réactionnelle **10,** complétée si besoin d'un solvant complémentaire **350** provenant de la fraction intermédiaire **360** issue de la zone de fractionnement **30.**

Dans un mode de réalisation selon l'invention, afin d'enrichir la fraction liquide recyclée dans la zone réactionnelle **10** et éventuellement dans la zone de conversion **20,** il est possible d'utiliser en aval de la zone de fractionnement **30** une unité **40** permettant d'enrichir la fraction recyclée en aromatiques, comme représenté par exemple sur la figure 2. La fraction intermédiaire **360** issue de la zone de fractionnement **30,** est séparée en au moins deux flux, un premier flux **370** qui n'est pas recyclé, et un second flux **380** qui est envoyé dans l'unité d'enrichissement en composés aromatiques **40** permettant de produire une coupe **410** riche en composés aromatiques, destinée à être utilisée en tant que solvant liquide **340** pour la zone réactionnelle **10** et éventuellement en tant que solvant liquide complémentaire **350** pour la zone de conversion **20,** et une autre coupe **420** pauvre en aromatiques qui n'est pas recyclée en tant que solvant et pouvant être éventuellement mélangée avec le premier flux **370.** L'unité **40** peut être constituée de tout moyen de séparation qui permet d'obtenir un flux riche en aromatiques comme par exemple un procédé d'extraction au solvant furfural, phénol ou N-méthyl-2-pyrrolidone connu aussi sous le nom NMP.

Les fractions **310, 420, 370** et **330** qui ne sont pas recyclées peuvent éventuellement être mélangées, avant d'être transportées dans un complexe de traitement, sur le site ou distant, qui permet le raffinage desdites fractions. Ces fractions sont caractérisées par le fait qu'elles contiennent uniquement des constituants issus du recyclage des déchets plastiques et des pneus usagés.

De manière à mieux comprendre l'invention, la description donnée ci-après à titre d'exemple d'application concerne un procédé de conversion d'une charge plastique et de conversion de pneus usagés permettant de maximiser la récupération de noir de carbone. En se reportant à la figure 3, la zone réactionnelle **10** permettant la dégradation thermique des pneus usagés comprend un silo **11** contenant la charge de pneus usagés relié à un premier réacteur agité **13** par une vis sans fin **12** permettant l'alimentation du réacteur **13.** Ce premier réacteur est alimenté en solvant liquide **340** et vise à favoriser la dissolution des granulats ou broyats de pneu contenus dans la charge solide **100.** La température dans le réacteur **13** est préférentiellement comprise entre 200°C et 300°C, préférentiellement entre 250°C et 280°C. Dans le réacteur **13,** les broyats ou les granulats sont dissous. Le temps nécessaire pour réaliser cette dissolution est préférentiellement compris entre 30 minutes et 2 heures. Les morceaux de gommes, et le noir de carbone qui se libère progressivement de la gomme, restent en suspension grâce à une agitation mécanique telle que représentée sur la figure 3 ou hydrodynamique, induite par exemple par un flux ascendant de liquide résultant d'une recirculation par convection forcée, ou par tout autre moyen permettant de maintenir le milieu agité. Les fils métalliques ou fibres textiles **150,** éventuellement présentes dans la charge solide et qui n'auraient pas été dissoutes, sédimentent et sortent du réacteur **13** à sa base. Dans ces conditions, la température est trop faible pour que les réactions de craquage carbone-carbone démarrent significativement et seules les liaisons de réticulation entre polymères, telles que les liaisons S-S liées à la vulcanisation des gommes peuvent craquer de manière conséquente. La fraction liquide obtenue contenant les matières solides résiduelles en suspension est dirigée vers un second réacteur agité **14** dans lequel on réalise les réactions de dégradation thermique dans des conditions de température modérée, i.e. à une température inférieure ou égale à 425°C, de préférence entre 375°C et 425°C, et pendant un temps limité (correspondant au temps de séjour de la fraction liquide dans le réacteur **14)** préférentiellement compris entre 30 minutes et 2 heures, préférentiellement entre 45 minutes et 90 minutes. La quantité de chaleur nécessaire pour réaliser les réactions de dégradation thermique peut être apportée par un échangeur localisé sur un tourne en rond **15** (« *pump-around* » selon la terminologie anglo-saxonne) autour du réacteur **14** comme représenté sur la figure 3, ou par tout autre moyen tel qu'un échangeur à la paroi du réacteur ou un échangeur ou un four sur la charge en amont du réacteur par exemple. L'agitation dans le réacteur **14** est maintenue grâce à un système d'agitation mécanique comme représenté sur la figure 3 ou par le système de tourne en rond **15** ou par tout autre moyen connu de l'homme du métier. De manière préférentielle, la pression du réacteur est maintenue à un niveau inférieur à 1,5 MPa grâce à une vanne de régulation (non représentée sur les figures). Avantageusement, les effluents gazeux des réacteurs **13** et **14** sont partiellement condensés dans une zone de séparation **19** afin d'obtenir un flux gazeux **110** et un flux liquide qui est mélangé ensuite avantageusement avec les autres flux liquides issus de la zone réactionnelle **10** pour former le flux **120.** L'essentiel des produits gazeux sont produits dans le deuxième réacteur **14** où s'effectue la majorité des réactions de dégradation thermique.

L'effluent liquide contenant les particules de noir de carbone en suspension est avantageusement refroidi dans des échangeurs **25, 26** qui permettent par ailleurs de réchauffer avantageusement les flux liquides circulant dans la zone de conversion **20** comprenant les réacteurs **23** et **27** tels que représentés sur la figure 3. En sortie des échangeurs **25** et **26,** la température est suffisamment basse pour permettre la filtration des particules de noir de carbone, par exemple sur un filtre rotatif **16,** fonctionnant préférentiellement à une température comprise entre 50° et 200°C. Ensuite, le gâteau de noir de carbone obtenu est lavé dans une unité de lavage-séchage **17** par un solvant aromatique léger tel que le toluène, à une température comprise préférentiellement entre 50 et 100°C, permettant de récupérer le noir de carbone **160.** Le solvant aromatique léger peut être récupéré ensuite en tête d'une colonne de distillation **18.** Le noir de carbone **160** séparé, lavé et séché peut ensuite être avantageusement pelletisé avec de l'eau pour former des pastilles de quelques millimètres par exemple pour faciliter son transport et sa valorisation. Le noir de carbone ainsi produit peut à nouveau être utilisé dans l'industrie des élastomères comme agent renforçant, ou comme pigment pour d'autres applications dans les encres ou les peintures par exemple, après des étapes de traitement ultérieur et de conditionnement de la matière en fonction des usages et des applications.
La fraction liquide hydrocarbonée **120** séparée directement de la filtration du noir de carbone après le filtre rotatif **16,** extraite du gâteau de filtration sortant alors en fond de colonne de distillation **18** ou obtenue par condensation des effluents gazeux des réacteurs **13** et **14** est alors dirigée au moins en partie vers la zone de conversion **20** des plastiques, après avoir été réchauffée dans l'échangeur **26** à une température comprise entre 160 et 300°C. Elle peut être éventuellement dirigée au moins en partie vers la zone de fractionnement **30.** La répartition entre les deux flux dépendant du besoin en solvant pour fluxer la charge de plastique à l'état fondu, comme évoqué ci-avant.

Une partie des effluents gazeux **110** peut également être collectée par exemple dans un ballon de flash à pression atmosphérique situé sur la coupe légère **310** en aval de la zone de fractionnement **30** (non représentée sur la figure 3).

Comme décrit précédemment, un des avantages de l'invention est d'utiliser le liquide produit pendant la décomposition thermique des pneus usagés pour mettre en œuvre la décomposition thermique des plastiques à une température plus basse que celle utilisée classiquement dans l'art antérieur (i.e. à une température inférieure à 450°C) pour maximiser les fractions liquides produites tout en préservant la quantité et la qualité des produits liquides grâce à la limitation des réactions de polycondensation conduisant à la formation de composés polyaromatiques, la limitation de la production de gaz et des réactions de cokage. En effet, la fraction liquide résultant de la conversion des pneus usagés contient des parts significatives de composés aromatiques qui sont de bons solvants pour les plastiques fondus et vont permettre de fluxer le milieu réactionnel et favoriser ainsi les transferts de matière et de chaleur. La fraction liquide hydrocarbonée **120** sortant de la zone réactionnelle **10** au niveau du filtre rotatif **16** ou au fond de la colonne de séparation **18** est dirigée au moins en partie vers la zone de conversion **20** avec un rapport entre la somme des débits liquides du flux **120** (et éventuellement **350)** et le débit de charge plastique **200** compris avantageusement entre 1 et 10 pds/ pds, préférentiellement compris entre 1,5 et 3 pds/pds. Si la quantité de liquide produite dans la zone de réaction **10** est plus importante, alors au moins une partie de la fraction liquide hydrocarbonée **120** peut être dirigée vers la zone de fractionnement **30.** Au contraire, si la quantité fraction liquide hydrocarbonée produite dans la zone réactionnelle **10** est insuffisante, alors une partie de solvant liquide complémentaire **350** issue de la coupe intermédiaire **360** produite dans la zone de fractionnement **30** peut être utilisée à ces fins pour compléter le flux liquide requis pour fluxer la charge plastique.

La zone de conversion **20** permettant la décomposition thermique de la charge plastique **200** à l'état fondu comprend un silo **21** contenant la charge de plastiques usagés reliée à un premier réacteur agité **23** par une vis sans fin **22** permettant l'alimentation du réacteur **23.** Préférentiellement, dans cette vis sans fin **22 ,** le plastique usagé est fondu, grâce à des moyen de chauffe en paroi dans la vis **22** qui est maintenue en charge. La température est préférentiellement ajustée et généralement comprise entre 100 et 250°C, préférentiellement entre 150 et 180°C en fonction de la nature et de la composition de la charge plastique. Le réacteur **23** est alimenté en fraction liquide hydrocarbonée **120** et éventuellement en solvant liquide complémentaire **350** pour favoriser la dissolution de la charge plastique, son mélange et sa dispersion dans un milieu de faible viscosité. La température dans le réacteur **23** est préférentiellement comprise entre 150 et 300°C en fonction de la nature des plastiques, et dans le cas de mélanges, on ajustera préférentiellement la température entre 250 et 300°C, ce qui permet de dissoudre la totalité des plastiques présents. Le temps nécessaire pour réaliser cette dissolution est préférentiellement compris entre 30 minutes et 2 heures. Les matières non solubles sont mises en suspension grâce à une agitation mécanique telle que représentée sur la figure 3 ou hydrodynamique, induite par exemple par un tourne en rond **24.** Les matières solides non solubles en suspension sont ensuite évacuées, par exemple à la sortie en fond de réacteur **23** par décantation **250.** Dans ces conditions, la température est trop faible pour que les réactions de craquage carbone-carbone démarrent significativement et seules les liaisons de réticulation entre polymères peuvent craquer de manière conséquente (en effet, certains polyéthylènes par exemple peuvent être réticulés).

La quantité de chaleur nécessaire à la dissolution et au mélange dans le réacteur **23** est induite par des échanges qui sont réalisables soit par réchauffage de la fraction liquide hydrocarbonée **120,** voire **350,** grâce à un échangeur tel que l'échangeur **26** représenté sur la figure 3, ou par un échange sur le tourne en rond **24** ou par chauffage à la paroi du réacteur **23** ou sur la vis sans fin **22.**

Le produit liquide obtenu est ensuite évacué vers un deuxième réacteur **27** après avoir éventuellement subi un réchauffage dans un échangeur **25** permettant d'augmenter la température du liquide à une température avantageusement inférieure à 450°C. Dans le réacteur **27,** les réactions de dégradation thermique se poursuivent dans des conditions de température modérée, i.e. à une température inférieure ou égale à 450°C, préférentiellement entre 375°C et 425°C, et pendant un temps limité correspondant au temps de séjour de la fraction liquide dans le réacteur **27,** préférentiellement compris entre 30 minutes et 6 heures, préférentiellement compris entre 1 heure et 4 heures. La quantité de chaleur nécessaire à la réaction peut être apportée par un échangeur localisé sur un tourne en rond autour du réacteur **28** comme représenté sur la figure 3, ou par tout autre moyen tel qu'un échangeur à la paroi du réacteur ou un four en amont du réacteur. L'agitation dans le milieu est maintenue grâce à un système d'agitation mécanique comme représenté ou par un système de tourne en rond **28** ou par tout autre moyen connu de l'homme du métier pour maintenir une température uniforme dans le réacteur et favoriser les transferts. De manière préférentielle, la pression du réacteur **27** est maintenue à un niveau inférieur à 1,5 MPa grâce à une vanne de régulation (non représentée sur les figures). Les effluents gazeux des réacteurs **23** et **27** sont partiellement condensés dans une zone de séparation **29** afin d'obtenir un flux gazeux **210** et un flux liquide qui est ensuite mélangé avantageusement avec le flux liquide issu du réacteur **27** pour former le flux **230.** L'essentiel des produits gazeux sont produits dans ce deuxième réacteur **27** où s'effectue l'immense majorité des réactions de dégradation thermique.

Une partie des effluents gazeux **210** peut également être collecté par exemple dans un ballon de flash à pression atmosphérique situé sur la coupe légère **310** en aval de la zone de séparation **30.**

La seconde fraction liquide hydrocarbonée **230** sortant de la zone de conversion **20** via le second réacteur **27,** et éventuellement de la zone de séparation **29,** est éventuellement mélangée avec la première fraction liquide hydrocarbonée **120** excédentaire issue de la zone réactionnelle **10** qui n'est pas utilisée comme solvant dans la zone de conversion **20** et est éventuellement refroidie et dirigée vers la zone de fractionnement **30.** Cette zone permet de séparer préférentiellement les fractions liquides hydrocarbonées en trois coupes, à savoir une fraction légère **310** dont le point d'ébullition final est préférentiellement compris entre 250°C et 325°C, une fraction intermédiaire **360** dont le point d'ébullition initial est préférentiellement compris entre 250°C et 325°C et le point d'ébullition final est préférentiellement compris entre 350°C et 450°C, et au moins une fraction lourde **330,** dont le point d'ébullition initial est préférentiellement compris entre 350°C et 450°C. La zone de fractionnement **30** peut ainsi être constituée d'une colonne de distillation contenant un soutirage en tête, un soutirage en fond et un soutirage latéral, ou d'un enchainement de plusieurs colonnes de distillation, tel qu'un enchaînement d'une colonne de distillation à pression atmosphérique opérant avec un soutirage en tête et un soutirage en fond, suivie d'une colonne de distillation opérant sous un vide peu poussé mais permettant de séparer les fractions hydrocarbonées à une température comprise entre 350°C et 450°C. Cette zone de fractionnement 30 permet donc de produire une coupe intermédiaire **360,** dont une partie peut être recyclée comme solvant liquide **340** dans la zone réactionnelle **10** ou éventuellement en tant que solvant liquide complémentaire **350** dans la zone de conversion **20,** le reste pouvant être valorisé comme produit.

Les fractions liquides **310, 360,** et **330** qui ne sont pas recyclées sont ensuite éventuellement mélangées, avant d'être transportées dans un complexe de traitement, sur le site ou distant, qui permet le raffinage.

La mise en œuvre des réactions de décomposition thermique à une température inférieure ou égale à 425°C dans la zone de conversion des pneus usagés, et inférieure ou égale à 450°C dans la zone de conversion des plastiques usagés et en présence d'un solvant favorisant le mélange et les transferts (chaleur, matière) présente deux avantages. D'une part, la coupe intermédiaire **360** est composée d'au moins 40% en poids de molécules par rapport au poids total de la fraction dont la température d'ébullition est supérieure à 300°C, et préférentiellement 40 % en poids dont la température d'ébullition est supérieure à 350°C. Cette fraction liquide est essentiellement composée de molécules oléfiniques, de paraffines et mono-aromatiques dont la conversion est aisée dans les structures de raffinage classiques qui sont équipées d'outils optimisés comme le craquage catalytique, l'hydrocraquage ou l'hydroconversion des résidus pétroliers. Le deuxième avantage est que cette fraction liquide est constituée d'une fraction très limitée de molécules contenant des cycles aromatiques polycondensés d'au moins deux cycles. En effet, si les conditions de mise en œuvre du procédé sont optimisées, la fraction polyaromatique condensée représente moins de 15% en poids de la fraction liquide totale, préférentiellement moins de 10 % en poids de la fraction liquide totale.

Lors du démarrage de l'installation, en l'absence de production d'une coupe intermédiaire stabilisée, il est possible d'utiliser temporairement un solvant importé qui sera préférentiellement constitué d'une teneur en molécules aromatiques supérieure à 50% poids par rapport au poids total de la coupe. Cette coupe pourra donc être constituée par exemple d'effluents de conversion du procédé de craquage catalytique FCC (abréviation de la terminologie anglo-saxonne "*Fluid Catalytic Cracking*", qui signifie craquage catalytique en lit fluidisé), de distillat moyen (LCO ou « *light cycle oil* » selon la terminologie anglo-saxonne) ou de distillat lourd (HCO ou « *heavy cycle oil* » selon la terminologie anglo-saxonne) par exemple.

Afin de minimiser la consommation d'énergie du procédé selon l'invention, il est préférable de limiter la quantité de solvant recyclé. Dans ces conditions, il est préférable que la quantité de solvant liquide complémentaire **350** injecté dans la zone de conversion **20** soit minimisée. Avantageusement, la quantité de charge plastique **200** est ajustée en fonction de la quantité de charge solide **100** pour minimiser la quantité de solvant liquide complémentaire **350.**

### Exemples

Les exemples suivants illustrent des modes de réalisations préférentiels du procédé selon la présente invention sans toutefois en limiter la portée. Le procédé utilisé pour illustrer l'invention est conforme à celui décrit sur la figure 3.

### Exemple 1 (conforme à l'invention)

Dans un premier exemple, le procédé selon l'invention traite 12 000 tonnes/an de granulats de pneus usagés (charge solide), exempts de fibres textiles et de fils métalliques. Ces granulats, produits par des granulateurs utilisant des broyeurs, proviennent de pneus poids lourds et les grains résultant du broyage ont une taille voisine de 2 millimètres. Le procédé traite également 20 000 tonnes/an de films plastique issus des filières de Déchets d'Activité Economique (DAE), qui arrivent sur le site de production en balles contenant au minimum 99% de films polyéthylène. Ces films sont tout d'abord séchés et déchiquetés pour faire des morceaux dont la taille n'excède pas 10 centimètres. Les granulats de pneus sont introduits en continu dans un réacteur de dissolution où ils sont mélangés au solvant liquide **340** issu du recycle de la coupe intermédiaire de la zone de fractionnement **30.** Cette coupe intermédiaire sert de solvant et possède un point d'ébullition initial d'environ 280°C, et un point d'ébullition final d'environ 380°C. La quantité de solvant qui est recyclée dans le réacteur **13** est de 36000 tonnes/an, correspondant à un taux de solvant/granulat égal à 3 pds/pds. Dans le réacteur **13,** la température est maintenue égale à 260°C ce qui permet de dissoudre les granulats. Les fractions liquides et le noir de carbone en suspension sont ensuite dirigées vers le réacteur **14** où la température est maintenue égale à 390°C pendant une heure. En sortie du réacteur **14,** la fraction liquide hydrocarbonée est séparée du noir de carbone au moyen d'un filtre rotatif **16** opérant à 140°C. Un lavage du solide filtré est effectué avec du toluène. La fraction liquide **120** collectée en sortie de la section **16,** en fond de colonne **18** et en sortie de la section **19** correspond à un débit de 43178 tonnes/an et est envoyée en intégralité vers la zone de conversion **20.**

Dans la deuxième partie du procédé, les films plastiques déchiquetés et séchés sont introduits dans le réacteur **23** avec une extrudeuse chauffée à 180°C pour fondre le plastique. Le plastique à l'état fondu est mélangé dans le réacteur **23** avec les 43178 tonnes/an de fraction liquide hydrocarbonée **120** produits dans la zone réactionnelle **10** auxquels on ajoute 16822 tonnes/an de solvant liquide complémentaire **350** recyclé de la zone de fractionnement **30.** Le débit total de solvant correspondant à la somme des flux **120** et **350** rapporté au débit de plastique usagé est donc maintenu à une valeur de 3 pds/pds. La température dans le réacteur **23** est maintenue à 200°C pendant 30 minutes pour finir la dissolution et bien mélanger le plastique fondu dans le solvant. L'effluent liquide obtenu est ensuite dirigé vers le réacteur **27** où la température est maintenue égale à 410°C pendant 4 heures. La seconde fraction liquide hydrocarbonée **230** collectée en sortie du réacteur **27** et en sortie de la section **29,** dont le débit est de 78 830 tonnes/an est envoyée vers la zone de fractionnement **30** qui produit une fraction légère **310** dont le point d'ébullition final est de 280°C avec un débit de 5 970 tonnes/an, une coupe intermédiaire **360** dont le point d'ébullition initial est de 280°C et le point d'ébullition final est de 380°C, dont le débit est de 58 232 tonnes/an, dont 5 410 tonnes/an sont exportées comme produits valorisés et 52 822 tonnes/an sont recyclées dans la zone réactionnelle **10** et la zone de conversion **20,** et une coupe lourde **330** de point d'ébullition initial de 380°C, dont le débit est de 14 628 tonnes/an.

Pour évaluer les rendements nets dans la zone de conversion **20,** on considère que le liquide utilisé comme solvant (provenant de la zone **10** ou de la zone **30),** ne réagit pas pendant la décomposition thermique des plastiques dans la zone **20.** En effet, le liquide utilisé comme solvant a déjà été exposé à des conditions de dégradation thermique dans des conditions similaires et sa réactivité est donc très fortement diminuée.

Les conditions opératoires, les rendements nets ainsi que les débits réels circulant dans les zones **10** et **20** sont consignés dans les tableaux 1 et 2 ci-après.

**Tableau 1**

| | | Zone de conversion des pneus **10** | Zone de conversion des plastiques **20** |
|---|---|---|---|
| Conditions Opératoires | | | |
| Type de charge | | Granulats PL | Films plastiques PE DAE |
| Débit de charge | t/a | 12000 | 20000 |
| Température décomposition thermique | °C | 390 | 410 |
| Temps de séjour décomposition thermique | h | 1 | 4 |
| Taux de solvant | pds/pds | 3 | 3 |

| Rendements nets | | | |
|---|---|---|---|
| Gaz incondensables | t/a | 132 | 690 |
| Noir de carbone **160** | t/a | 4440 | |
| Autres solides **(150;250)** | t/a | 250 | 480 |

| Liquide (ASTM - D2887) | | | |
|---|---|---|---|
| Point inital-150°C | t/a | 1211 | 602 |
| 150-220°C | t/a | 971 | 936 |
| 220-280°C | t/a | 911 | 1339 |
| 280-380°C | t/a | 1659 | 3751 |
| 380-520°C | t/a | 1747 | 6989 |
| 520°C-Point final | t/a | 681 | 5212 |

**Tableau 2**

| Débit (t/a) | | N° de flux | | | | | | | | |
|---|---|---|---|---|---|---|---|---|---|---|
| | | **340** | **110** | **120** | **350** | **210** | **230** | **310** | **360** | **330** |
| Gaz | | | 132 | | | 690 | | | | |
| Liquide (ASTM - D2887) | Point inital-150°C | | | 1211 | | | 1813 | 1813 | | |
| | 150-220°C | | | 971 | | | 1907 | 1907 | | |
| | 220-280°C | | | 911 | | | 2250 | 2250 | | |
| | 280-380°C | 36000 | | 37659 | 16822 | | 58232 | | 58232 | |
| | 380-520°C | | | 1747 | | | 8735 | | | 8735 |
| | 520°C-Point final | | | 681 | | | 5893 | | | 5893 |
| Total | | 36000 | 132 | 43178 | 16822 | 690 | 78830 | 5970 | 58232 | 14628 |

Dans le tableau 3 ci-après, on compare les compositions de la première fraction liquide hydrocarbonée en net (i.e. sans intégrer le recyclage de la coupe intermédiaire) et en réel (i.e. en intégrant le recyclage de la coupe intermédiaire), dans la section de valorisation des pneus usagés.

**Tableau 3**

| | Zone de conversion des pneus **10** | | Zone de conversion des plastiques **20** | |
|---|---|---|---|---|
| Distillation simulée ASTM-D2887 | Liquide sans recycle solvant | Liquide avec recycle solvant | Liquide sans recycle solvant | Liquide avec recycle solvant |
| | % pds par rapport au poids total de la fraction liquide | | | |
| T < 150°C | 17% | 3% | 3% | 2% |
| T < 220°C | 30% | 5% | 8% | 5% |
| T < 280°C | 43% | 7% | 15% | 8% |
| T < 380°C | 66% | 94% | 35% | 81% |
| T < 520°C | 91% | 98% | 72% | 93% |

On constate que le recyclage de la coupe intermédiaire **360** permet d'alléger très significativement la composition du liquide présent dans les réacteurs. Ainsi, en sortie de la zone réactionnelle **10,** dans la fraction liquide hydrocarbonée nette (correspondant à la production de liquide par décomposition de pneus sans intégrer le recyclage de solvant), la fraction inférieure à 380°C (correspondant à des distillats atmosphériques) correspond à seulement 66% en poids par rapport au poids total de la fraction liquide, alors que celle-ci est de 94% en poids lors du recyclage de la coupe intermédiaire **360** en tant que solvant liquide **340.** De même, on constate que la fraction de liquide de température d'ébullition initiale supérieure à 520°C, qui correspond à un résidu non distillable, même sous vide, est de 9% en poids dans le liquide net, mais est seulement de 2% en poids lors du recyclage de la coupe intermédiaire **360** en tant que solvant liquide **340.** La mise en contact du solvant liquide issu de la coupe intermédiaire dans le réacteur permet de diminuer la proportion de fractions lourdes et cela facilite donc les transferts et l'agitation, en baissant notamment la viscosité du milieu réactionnel.

Dans le tableau 3, on compare également les compositions de la seconde fraction liquide hydrocarbonée en net (i.e. sans intégrer le recyclage de la coupe intermédiaire) et en réel (i.e. en intégrant le recyclage de la coupe intermédiaire), pour la zone de conversion **20** des plastiques usagés. On constate que le recyclage de la coupe intermédiaire **360** permet d'abaisser très significativement la courbe d'ébullition du liquide présent dans les réacteurs **23** et **27.** Ainsi, en sortie de la zone de conversion **20** de décomposition thermique des plastiques usagés, dans la seconde fraction liquide hydrocarbonée nette (i.e. correspondant à la production de liquide par décomposition du plastique sans intégrer le recyclage de solvant liquide complémentaire), la fraction inférieure à 380°C (correspondant à des distillats atmosphériques) correspond à seulement 35% en poids seulement par rapport au poids total de la fraction liquide, alors que celle-ci est de 81% en poids lors du recyclage de la coupe intermédiaire en tant que solvant liquide **340** et solvant liquide complémentaire **350.** De même, on constate que la part supérieure à 520°C, qui correspond à un résidu non distillable, même sous vide, est de 28% poids dans la seconde fraction liquide hydrocarbonée nette, mais est seulement de 7% en poids lors du recyclage. La mise en contact de la première fraction liquide hydrocarbonée avec la charge plastique à l'état fondu dans la zone de conversion **20** de permet de diminuer la proportion de fractions lourdes et cela facilite donc les transferts et l'agitation, en baissant notamment la viscosité. Dans le cas des plastiques usagés, l'effet est encore amplifié par le fait que la teneur en aromatiques de la première fraction liquide hydrocarbonée (jouant le rôle de solvant) est conséquente, alors que les molécules résultant de la dégradation thermique des polyoléfines sont essentiellement des paraffines et des oléfines linéaires ou peu ramifiées.

L'analyse des produits formés montre que la teneur en produits mono-aromatiques dans la fraction liquide hydrocarbonée résultant de la décomposition thermique des pneus est de 38% en poids par rapport au poids total de la fraction liquide, et que la teneur en molécules contenant des cycles aromatiques polycondensés (essentiellement di-aromatiques) est de 6% poids. L'analyse montre également que l'essentiel des produits liquides résultants de la décomposition thermique des plastiques usagés contiennent essentiellement des paraffines et des oléfines, la teneur en aromatiques étant inférieure à 3% poids.
Dans ces conditions les fractions liquides hydrocarbonées résultant de la dégradation thermique des pneus usagés et des plastiques usagés contiennent entre 10 et 11% poids de produits mono-aromatiques et entre 1,5 et 2% en poids de molécules contenant des cycles aromatiques polycondensés (essentiellement di-aromatiques) par rapport au poids total desdites fractions liquides.

### Exemple 2 (conforme à l'invention)

Par rapport à l'exemple 1, une partie de la fraction liquide hydrocarbonée **120** produits dans la zone réactionnelle **10** est envoyée vers la zone de conversion **20,** l'autre partie étant envoyée dans la zone de fractionnement **30.**
Dans le second exemple, le procédé selon l'invention traite 15 000 tonnes/an de granulats de pneus usagés, exempts de fibres textiles et fils métalliques. Ces granulats, produits par des granulateurs utilisant des broyeurs, proviennent de pneus poids lourds et les grains résultant du broyage ont une taille voisine de 2 millimètres. Le procédé traite également 15 000 tonnes/an de films plastique issus des filières de Déchets d'Activité Economique (DAE), qui arrivent sur le site de production en balles contenant au minimum 99% poids de films en polyéthylène. Ces films sont aussi séchés et déchiquetés pour faire des morceaux dont la taille n'excède pas 10 centimètres. Les granulats de pneus sont introduits en continu dans un réacteur de dissolution où ils sont mélangés au solvant liquide **340** issue du recycle de la coupe intermédiaire de la zone de fractionnement **30.** Cette coupe intermédiaire sert de solvant et possède un point d'ébullition initial d'environ 280°C, et un point d'ébullition final d'environ 380°C. La quantité de solvant qui est recyclée dans le réacteur **13** est de 45 000 tonnes/an, correspondant à un taux de solvant/granulat égal à 3 pds/pds. Dans le réacteur **13,** la température est maintenue égale à 260°C ce qui permet de dissoudre les granulats. Les fractions liquides et le noir de carbone en suspension sont ensuite dirigées vers le réacteur **14** où la température est maintenue égale à 390°C pendant une heure. En sortie du réacteur **14,** la fraction liquide hydrocarbonée est séparée du noir de carbone au moyen d'un filtre rotatif **16** opérant à 140°C. Un lavage du solide filtré est effectué avec du toluène. La fraction liquide **120** collectée en sortie de la section **16** et en fond de colonne **18** et en sortie de la section **19** correspond à un débit de 54 035 tonnes/an et est envoyée en partie vers la zone de conversion **20** et en partie vers la zone de fractionnement **30.**

Dans la deuxième partie du procédé, les films plastiques déchiquetés et séchés sont introduits dans le réacteur **23** avec une extrudeuse chauffée à 140°C pour fondre le plastique. On souhaite mélanger le plastique avec un solvant à un taux de solvant/plastique de 3, comme dans l'exemple 1, ce qui requiert l'introduction de 45000 tonnes/an de fraction liquide hydrocarbonée **120** produits dans la zone réactionnelle **10,** le débit restant étant envoyé dans la zone de fractionnement **30.** Il n'est donc pas nécessaire ici de recycler une part de la coupe intermédiaire **360** produite à la section **30** en tant que solvant liquide complémentaire **350.** Le débit total de solvant correspondant au flux **120** envoyé vers la zone de conversion **20** rapporté au débit de plastique usagé est donc à une valeur de 3 pds/pds. La température dans le réacteur **23** est maintenue à 180°C pendant 30 minutes pour finir la dissolution et bien mélanger le plastique fondu dans le solvant. L'effluent liquide obtenu est ensuite dirigé vers le réacteur **27** où la température est maintenue égale à 410°C pendant 4 heures. La seconde fraction liquide hydrocarbonée **230** en sortie du réacteur **27,** dont le débit est de 59 123 tonnes/an est envoyée vers la zone de fractionnement **30** qui produit une fraction légère **310** dont le point d'ébullition final est de 280°C avec un débit de 6 051 tonnes/an, une coupe intermédiaire **360** dont le point d'ébullition initial est de 280°C et le point d'ébullition final est de 380°C, dont le débit est de 49 901 tonnes/an, dont 4 901 tonnes/an sont exportées comme produits valorisés et 45 000 tonnes/an sont recyclées dans la zone réactionnelle **10,** et une coupe lourde **330** de point d'ébullition initial de 380°C, dont le débit est de 12 206 tonnes/an.

Pour évaluer les rendements nets dans la zone de conversion **20,** on considère que le liquide utilisé comme solvant (provenant de la zone **10** ou de la zone **30),** ne réagit pas pendant la décomposition thermique des plastiques dans la zone **20.** En effet, le liquide utilisé comme solvant a déjà été exposé à des conditions de dégradation thermique dans des conditions similaires et sa réactivité est donc très fortement diminuée

Les conditions opératoires, les rendements nets ainsi que les débits réels circulant dans les zones **10** et **20** sont consignées dans les tableaux 4 et 5 ci-après.

**Tableau 4**

| | | Zone de conversion des pneus **10** | Zone de conversion des plastiques **20** |
|---|---|---|---|
| Conditions Opératoires | | | |
| Type de charge | | Granulats PL | Films plastiques PE DAE |
| Débit de charge | t/a | 15000 | 15000 |
| Température décomposition thermique | °C | 390 | 410 |
| Temps de séjour décomposition thermique | h | 1 | 4 |
| Taux de solvant | pds/pds | 3 | 3 |

| Rendements nets | | | |
|---|---|---|---|
| Gaz | t/a | 165 | 518 |
| Noir de carbone **160** | t/a | 5550 | |
| Autres solides **(150;250)** | t/a | 250 | 360 |

| Liquide (ASTM - D2887) | | | |
|---|---|---|---|
| Point inital-150°C | t/a | 1524 | 452 |
| 150-220°C | t/a | 1222 | 702 |
| 220-280°C | t/a | 1147 | 1005 |
| 280-380°C | t/a | 2088 | 2813 |
| 380-520°C | t/a | 2198 | 5242 |
| 520°C-Point final | t/a | 857 | 3909 |

**Tableau 5**

| Débit (t/a) | | N° de flux | | | | | | | | | |
|---|---|---|---|---|---|---|---|---|---|---|---|
| | | **340** | **110** | **120** | **120** vers zone **20** | **120** vers zone **30** | **210** | **230** | **310** | **360** | **330** |
| Gaz | | | 165 | | | | 518 | | | | |
| Liquide (ASTM - D2887) | Point inital-150°C | | | 1524 | 1269 | 255 | | 1721 | 1976 | | |
| | 150-220°C | | | 1222 | 1017 | 204 | | 1719 | 1924 | | |
| | 220-280°C | | | 1147 | 955 | 192 | | 1959 | 2151 | | |
| | 280-380°C | 45000 | | 47088 | 39214 | 7873 | | 42028 | | 49901 | |
| | 380-520°C | | | 2198 | 1831 | 368 | | 7072 | | | 7440 |
| | 520°C-Point final | | | 857 | 713 | 143 | | 4623 | | | 4766 |
| Total | | 45000 | 165 | 54035 | 45000 | 9035 | 518 | 59123 | 6051 | 49901 | 12206 |

Dans le tableau 6, ci-après on compare les compositions de la première fraction liquide hydrocarbonée en net (i.e. sans intégrer le recyclage de la coupe intermédiaire) et en réel (i.e. en intégrant le recyclage de la coupe intermédiaire), dans la section de valorisation des pneus usagés.

**Tableau 6**

| | Zone de conversion des pneus **10** | | Zone de conversion des plastiques **20** | |
|---|---|---|---|---|
| Distillation simulée ASTM-D2887 | Liquide sans recycle solvant | Liquide avec recycle solvant | Liquide sans recycle solvant | Liquide avec recycle solvant |
| | % pds par rapport au poids total de la fraction liquide | | | |
| T < 150°C | 17% | 3% | 3% | 3% |
| T < 220°C | 30% | 5% | 8% | 6% |
| T < 280°C | 43% | 7% | 15% | 9% |
| T < 380°C | 66% | 94% | 35% | 80% |
| T < 520°C | 91% | 98% | 72% | 92% |

On constate que le recyclage de la coupe intermédiaire **360** permet d'alléger très significativement la composition du liquide présent dans les réacteurs. Ainsi, en sortie de la zone réactionnelle **10,** dans la fraction liquide hydrocarbonée nette (correspondant à la production de liquide par décomposition de pneus sans intégrer le recyclage de solvant), la fraction inférieure à 380°C (correspondant à des distillats atmosphériques) correspond à seulement 66% en poids par rapport au poids total de la fraction liquide, alors que celle-ci est de 94% en poids lors du recyclage de la coupe intermédiaire **360** en tant que solvant liquide **340.** De même, on constate que la fraction de liquide de température d'ébullition initiale supérieure à 520°C, qui correspond à un résidu non distillable, même sous vide, est de 9% en poids dans le liquide net, mais est seulement de 2% en poids lors du recyclage de la coupe intermédiaire **360** en tant que solvant liquide **340.** La mise en contact du solvant liquide issu de la coupe intermédiaire dans le réacteur permet de diminuer la proportion de fractions lourdes et cela facilite donc les transferts et l'agitation, en baissant notamment la viscosité du milieu réactionnel.
Dans le tableau 6, on compare également les compositions de la seconde fraction liquide hydrocarbonée en net (i.e. sans intégrer le recyclage de la coupe intermédiaire) et en réel (i.e. en intégrant le recyclage de la coupe intermédiaire), pour la zone de conversion **20** des plastiques usagés. On constate que le recyclage de la coupe intermédiaire **360** permet d'abaisser très significativement la courbe d'ébullition du liquide présent dans les réacteurs **23** et **27.** Ainsi, en sortie de la zone de conversion **20** de décomposition thermique des plastiques usagés, dans la seconde fraction liquide hydrocarbonée nette (i.e. correspondant à la production de liquide par décomposition du plastique sans intégrer le recyclage de solvant liquide complémentaire), la fraction inférieure à 380°C (correspondant à des distillats atmosphériques) correspond à seulement 35% en poids seulement par rapport au poids total de la fraction liquide, alors que celle-ci est de 80% en poids lors du recyclage de la coupe intermédiaire en tant que solvant **340.** De même, on constate que la part supérieure à 520°C, qui correspond à un résidu non distillable, même sous vide, est de 28% poids dans la seconde fraction liquide hydrocarbonée nette, mais est seulement de 8% en poids lors du recyclage. La mise en contact de la première fraction liquide hydrocarbonée avec la charge plastique à l'état fondu dans la zone de conversion **20** de permet de diminuer la proportion de fractions lourdes et cela facilite donc les transferts et l'agitation, en baissant notamment la viscosité. Dans le cas des plastiques usagés, l'effet est encore amplifié par le fait que la teneur en aromatiques de la première fraction liquide hydrocarbonée (jouant le rôle de solvant) est conséquente, alors que les molécules résultant de la dégradation thermique des polyoléfines sont essentiellement des paraffines et des oléfines linéaires ou peu ramifiées.

L'analyse des produits formés montre que la teneur en produits mono-aromatiques dans la fraction liquide hydrocarbonée résultant de la décomposition thermique des pneus est de 38% en poids par rapport au poids total de la fraction liquide, et que la teneur en molécules contenant des cycles aromatiques polycondensés (essentiellement di-aromatiques) est de 6% poids. L'analyse montre également que l'essentiel des produits liquides résultants de la décomposition thermique des plastiques usagés contiennent essentiellement des paraffines et des oléfines, la teneur en aromatiques étant inférieure à 3% poids.

Dans ces conditions les fractions liquides hydrocarbonées résultant de la dégradation thermique des pneus usagés et des plastiques usagés contient entre 14 et 15% poids de produits mono-aromatiques et entre 2,0 et 2,5% en poids de molécules contenant des cycles aromatiques polycondensés (essentiellement di-aromatiques) par rapport au poids total desdites fractions liquides.

En comparant les résultats de l'exemple 1 et de l'exemple 2, on constate que, bien que les quantités traitées soient différentes, et que la façon d'ajuster le solvant soit différente dans les deux exemples, les bénéfices liés à la mise en œuvre du procédé selon l'invention avec le recyclage du solvant restent similaires.

## Revendications

1. Procédé de conversion d'une charge plastique et de conversion de pneus usagés pour obtenir du noir de carbone comprenant au moins les étapes suivantes :
a) on envoie une charge solide (100) à base de pneus usagés dans une zone réactionnelle (10) en présence d'un solvant liquide (340) comprenant des composés aromatiques pour dissoudre au moins en partie ladite charge solide et décomposer thermiquement à une température inférieure ou égale à 425°C ladite charge solide au moins partiellement dissoute afin d'obtenir au moins du noir de carbone (160) et une première fraction liquide hydrocarbonée (120) ;
b) on envoie une charge plastique (200) à l'état fondu ensemble avec au moins une partie de la première fraction liquide hydrocarbonée (120) obtenue à l'issue de l'étape a) dans une zone de conversion (20) pour dissoudre au moins en partie ladite charge plastique à l'état fondu (200) et décomposer thermiquement à une température inférieure ou égale à 450°C ladite charge plastique partiellement dissoute afin d'obtenir au moins en partie une seconde fraction liquide hydrocarbonée (230).

2. Procédé selon la revendication 1 comprenant en outre les étapes suivantes :
c) on envoie au moins en partie la fraction liquide hydrocarbonée (120) issue de l'étape a) vers une zone de fractionnement (30) pour obtenir au moins une coupe hydrocarbonée intermédiaire (360) dont la température d'ébullition initiale est comprise entre 250 et 325°C et la température d'ébullition finale est comprise entre 350 et 450°C, une coupe légère et une coupe lourde ;
d) on envoie au moins en partie une fraction de la coupe hydrocarbonée intermédiaire (360) vers la zone de réaction (10) de l'étape a) en tant que solvant liquide (340).

3. Procédé selon l'une des revendications 1 ou 2, dans lequel ladite première fraction liquide hydrocarbonée (120) a une teneur en composés aromatiques comprise entre 30 et 70% en poids par rapport au poids total de ladite première fraction liquide.

4. Procédé selon l'une des revendications 2 ou 3, dans lequel ladite coupe hydrocarbonée intermédiaire (360) a une teneur en composés aromatiques comprise entre 30 et 70% poids par rapport au poids total de ladite coupe hydrocarbonée intermédiaire.

5. Procédé selon l'une quelconque des revendications 2 à 4, dans lequel on envoie une partie de la seconde fraction liquide hydrocarbonée (230) vers la zone de fractionnement (30).

6. Procédé selon l'une quelconque des revendications 2 à 5, dans lequel on envoie au moins en partie une fraction de la coupe hydrocarbonée intermédiaire (360) vers la zone de conversion (20) en tant que solvant liquide complémentaire (350).

7. Procédé selon l'une quelconque des revendications 2 à 6, dans lequel on envoie au moins en partie la coupe hydrocarbonée intermédiaire (360) vers une unité d'enrichissement en composés aromatiques (40) pour obtenir un flux riche en composés aromatiques (410) et un flux pauvre en composés aromatiques (420), ledit flux riche en composés aromatiques (410) étant envoyé dans la zone réactionnelle (10) en tant que solvant liquide (340).

8. Procédé selon la revendication 7, dans lequel on envoie au moins en partie ledit flux riche en composés aromatiques (410) vers la zone de conversion (20) en tant que solvant liquide complémentaire (350).

9. Procédé selon l'une des revendications 7 ou 8, **caractérisé en ce que** ladite unité d'enrichissement en composés aromatiques (40) est choisie parmi les unités d'extraction au solvant furfural, phénol ou N-méthyl-2-pyrrolidone.

10. Procédé selon l'une quelconque des revendications 1 à 9, dans lequel ladite charge plastique est un mélange de plastique contenant au moins 90% en poids de polyoléfines et de polystyrène par rapport au poids total de ladite charge.

11. Procédé selon l'une quelconque des revendications 1 à 10, dans lequel la première fraction liquide hydrocarbonée (120) et/ou la seconde fraction liquide hydrocarbonée (230) comprend au moins 40% en poids de composés dont la température d'ébullition initiale est supérieure à 300°C.

12. Procédé selon l'une quelconque des revendications 2 à 11, dans lequel le ratio entre le débit du solvant liquide (340) et le débit de ladite charge solide (100) injectés dans la zone réactionnelle (10) est compris entre 1 et 10 poids/poids.

13. Procédé selon l'une quelconque des revendications 6 à 12, dans lequel le ratio entre la somme des débits de la fraction liquide hydrocarbonée (120) et le solvant liquide complémentaire (350) divisée par le débit de la charge plastique (200) à l'état fondu est comprise entre 1 et 10 poids/poids.

14. Procédé selon l'une quelconque des revendications 1 à 13, dans lequel l'étape a) comprend les sous-étapes suivantes :
a1) on envoie ladite charge solide (100) et ledit solvant liquide (340) dans un premier réacteur agité (13) pour dissoudre au moins en partie ladite charge solide (100) ;
a2) on envoie ladite charge solide au moins en partie dissoute obtenu à l'issue de l'étape a1) dans un second réacteur agité (14) pour décomposer thermiquement à une température inférieure ou égale à 425°C ladite charge solide et obtenir un effluent liquide contenant des particules de noir de carbone en suspension ;
a3) on refroidit ledit effluent liquide obtenu à l'issue de l'étape a2) à une température inférieure à 150°C ;
a4) on filtre, on lave et on sépare les particules de noir de carbone de l'effluent liquide refroidi obtenu à l'issue de l'étape a3) pour obtenir du noir de carbone (160) et une première fraction liquide hydrocarbonée (120).

15. Procédé selon l'une quelconque des revendications 1 à 14, dans lequel l'étape b) comprend les sous-étapes suivantes :
b1) on envoie ladite charge plastique (200) à l'état fondu et au moins une partie de la première fraction liquide hydrocarbonée (120) dans un premier réacteur agité (23) pour dissoudre au moins en partie ladite charge plastique à l'état fondu ;
b2) on envoie ladite charge plastique au moins en partie dissoute obtenu à l'issue de l'étape b1) dans un second réacteur agité (27) pour décomposer thermiquement à une température inférieure ou égale à 425°C ladite charge plastique et obtenir au moins en partie une seconde fraction liquide hydrocarbonée (230).
